(19) Europäisches Patentamt
European Patent Office
Office européen des brevets

(11) Publication number: **0 408 199 A1**

(12) **EUROPEAN PATENT APPLICATION**

(21) Application number: **90306548.0**

(51) Int. Cl.[5]: **A01K 1/015**, C07F 9/24

(22) Date of filing: **15.06.90**

(30) Priority: **15.06.89 US 366713**

(43) Date of publication of application: **16.01.91 Bulletin 91/03**

(84) Designated Contracting States: **BE DE FR GB IT SE**

(71) Applicant: **W.R. Grace & Co.-Conn.nn.**
**1114 Avenue of the Americas**
**New York New York 10036(US)**

(72) Inventor: **Wax, Michael Jay**
**8955E Early April Way**
**Columbia, MD 21046(US)**

(74) Representative: **Bentham, Stephen et al**
**J.A. Kemp & Co. 14 South Square Gray's InnInn**
**London WC1R 5EU(GB)**

(54) **Prevention of ammonia generation in animal areas.**

(57) The accumulation of gaseous ammonia in areas wherein animals are housed or maintained is controlled by providing to the areas animal letter, bedding, or other absorbent material which contain a urease inhibiting compound. Phosphorodiamide compounds are used and especially phenylphosphorodamidate. These compounds can be used in concentrations of 0.1 to 1000 ppm, expressed as the ratio of the weight of compound per weight of dry bedding.

EP 0 408 199 A1

# PREVENTION OF AMMONIA GENERATION IN ANIMAL AREAS.

This invention is concerned with a method for the control of ammonia generation in animal litters, beddings, and related absorbent materials and the resulting improved materials. More particularly, this invention is concerned with a method for the use of urease-inhibiting compounds such as phenylphosphorodiamidate for the control of ammonia generation in these materials.

Ammonia is generated quickly in any area in which urine is allowed to collect. This is the result of enzyme-catalyzed hydrolysis of urea, which is a key component of urine. Each molecule of urea may react with water to produce two molecules of ammonia. Ammonia has a disagreeable odor, and may be toxic at high concentrations.

In areas in which animals such as horses, cows, sheep, and pigs are kept, such as stalls, barns, cattle cars, or other enclosures, or in outdoor areas such as feed lots where many animals are maintained in close proximity, considerable amounts of ammonia may accumulate. This is a result of the enzyme-catalyzed hydrolysis of urea in the animal urine, which may collect in significant quantities. As mentioned above, the ammonia possesses an unpleasant smell. Further, ammonia is known to be harmful to animals.

The family of enzymes which catalyze the hydrolysis of urea are known as ureases, here collectively referred to as "urease". In the setting of animal areas, the sources of urease are various bacteria. For example, Proteus mirabilis, found in animal digestive tracts, and Bacillus pasteurii, found in soil, both produce urease. Many types of bacteria may in fact be present. These bacteria need nitrogen for growth and sustenance. As they cannot utilize urea directly to satisfy this need, they produce urease to convert the urea into the usable form of ammonia.

Several methods of lowering the level of ammonia in animal areas are known. The first of these is increased ventilation: by increasing the flow of air into a given space, the average ammonia concentration will be lessened. However, this method may be quite expensive, as it requires power for fans or blowers, as well as entailing increased heating or cooling costs when external air is brought into an enclosed space. Further, in feed lots and similar areas ventilation is impractical.

A second method of controlling the level of ammonia in a given area is through the use of absorbents which are specific for ammonia. However, specific absorbents may be quite expensive. A further concern is that large quantities of absorbents may be required to cope with the ammonia generated in animal areas.

A third method of controlling ammonia accumulation is to prevent its formation. This may be done through the use of biocides to kill the bacteria which produce urease. Biocides which do not harm animals or humans, however, typically will not be effective against all the possible strains of bacteria which may be present. Bacteria also may develop resistance to biocides.

Desiccation also may be used to prevent ammonia formation. When no free liquid is available, little bacterial growth will occur, and hence little urease will be present. In view of the large amounts of urine formed by animals, effective desiccation is very difficult, and will require large quantities of desiccant. Further, these desiccants may be irritating or toxic to animals.

Alternatively, chemicals which prevent catalysis of the hydrolysis of urea by urease may be used. These are known as urease inhibitors. Because each molecule of urease may catalyze the formation of many molecules of ammonia, very small amounts of inhibitor should be needed to prevent the production of noticeable or toxic amounts of ammonia. Thus, it is to be expected that part-per-million (ppm) levels of inhibitors will be needed.

The use of urease inhibitors to prevent the formation of ammonia from urine has been disclosed in several patents and publications. For example, U.S. Patent 3,892,846 teaches the use of hydroxamic acids and acid salts in animal enclosures. These compounds are applied to bedding material at concentrations ranging from about 0.1 to about 250 ppm, and have some utility in inhibiting the urease-catalyzed decomposition of urea. However, the preferred material of the instant invention, phenylphosphorodiamidate, has greater effectiveness in this regard.

U.S. Patents 4,462,819, 4,517,002, 4,517,003, 4,517,004, 4,517,005, 4,517,007, 4,518,413, 4,528,020, 4,530,714, 4,537,614, 4,539,037, 4,540,428, 4,624,695, 4,629,491, and 4,696,693 teach the use of a wide variety of urease inhibitors in preventing the formation of ammonia from urea. However, these patents are concerned largely with the inhibitors as additives to improve the performance of urea-based fertilizers. Cursory reference is made in each to the problem of ammonia generation from animal urine.

German Democratic Republic Patent 241,012 A1 discloses the use of phenylphosphorodiamidate to prevent the formation of ammonia from animal wastes. While the use of this compound in stables, either alone or in combination with disinfectants or cleansers, is mentioned, no use in combination with animal litters, beddings, or absorbent materials, nor

method of application thereto, is discussed. Claim 2 of the patent refers to application amounts based on weight per $m^2$ of barn floor area. This further demonstrates that the patentees did not envision use with beddings. Additional work in the German Democratic Republic (Wenzel, K.-D., et al. , Zeitschrift fuer Chemie 1983, 23 , 369-373) has verified the efficacy of phenylphosphorodiamidate as a urease inhibitor.

It is an object of the current invention to provide a method for the prevention of the accumulation of ammonia in animal areas.

It is a further object of this invention to provide a method for the control of the generation of ammonia in animal areas.

It is a further object of this invention to provide a method for the prevention of the generation of ammonia from urine collected in animal areas.

It is a further object of this invention to provide a method of inhibiting the action of the enzyme urease on urea in animal urine.

It is a further object of this invention to provide a method for the application of compounds which inhibit the action of the enzyme urease to animal litter or bedding, or to other absorbent materials present in animal areas.

It is a further object of this invention to provide an animal litter, bedding or other adsorbent material with a substance which will control the generation of ammonia in animal areas.

These and further objects of the current invention will become apparent as the description below proceeds.

A method has been developed for preventing the accumulation of gaseous ammonia in areas wherein animals are housed or maintained. The method comprises providing to the areas animal litter, bedding, or other absorbent material which contain a urease inhibiting compound. Compounds which have this property include phosphorodiamide compounds of the formula

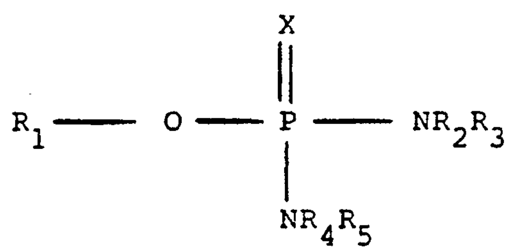

wherein
X is oxygen or sulfur;
$R^1$ is alkyl, aralkyl, cycloalkyl, heterocycle, cycloalkenyl, alkenyl or alkynyl either unsubstituted or substituted with one or more halo, hydroxy, thiocyano, heterocycle, alkylamino, dialkylamino, alkoxy, nitro, isocyano, quaternary ammonium, arylamino, alkanoyl, trihalomethyl, aryloxy, cyano, amino, isocyanato, acyloxy, $-ONO_2$, $-SO_2OH$, mercapto, arylmercapto, alkylmercapto, carboxyalkyl, $-OPO(OH)_2$, $-OB(OH)_2$, -OPO (OR) OH, $-OPO(OR)_2$, $-OSO_2OR$, $-SO_2R$, and $-OSO_2R$, wherein R is aliphatic or aryl, (aliphatic groups R are preferably alkyl of 1 to 4 carbon atoms) or a combination thereof, or

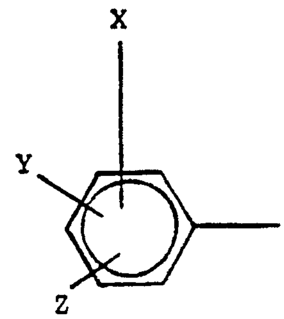

wherein
X, Y or Z are the same or different and are hydrogen, alkyl, arylamino, diarylamino, halogen, hydroxy, mercapto, alkylmercapto, amino, cyano, nitro, alkylamino, dialkylamino, arylmercapto, iscyano, isocyanato, trihalogenmethyl, alkoxy, thiocyano, alkanoyl, diaminophosphinyl, O-diaminophosphinyl, S-diaminophosphinyl, N-diaminophosphinyl, or any two X, Y and Z groups together may form an alkylene or alkenylene chain which may optionally include one or more divalent oxygen, nitrogen, or sulfur moieties forming a 3,4,5 or 6 membered fused ring structure, and
$R_2$, $R_3$, $R_4$ and $R_5$ are individually hydrogen, or alkyl having from 1 to about 4 carbon atoms.

A preferred compound is phenylphosphorodiamidate, which can be abbreviated PPDA. In one preferred embodiment the phenylphosphorodiamidate is applied to animal litter, bedding, or other absorbent material which is present in such areas. The phenylphosphorodiamidate functions as a urease inhibitor, and thus retards the formation of ammonia through the urease-catalyzed hydrolysis of urea, a component of animal urine. As little or no ammonia will be formed, little accumulation of ammonia should occur.

The phosphorodiamide and more preferably the preferred phenylphosphorodiamidate will be particularly effective when applied to litter or bedding with water absorbent properties. Water-absorbent materials such as wood shavings will reduce the amount of free liquid in which the urease-catalyzed hydrolysis of urea may occur. Thus, phenylphosphorodiamidate will act in combination with an absorbent litter or bedding to result in greatly reduced levels of ammonia.

The phosphorodiamide and more preferably

the preferred phenylphosphorodiamidate will be applied in any effective amount. An effective amount may be defined as the amount necessary to maintain the ambient ammonia level below some desired value. This value may be the threshold for olfactory detection, the threshold limit value, TLV, set for worker exposure, i.e., 50 ppm, or any other chosen value. A convenient value is 10 ppm. The amount of the compound needed obviously will depend upon the targeted maximum ammonia level, and also will depend upon the litter, bedding, or other absorbent material used, as well as on such factors as the nature and number of animals, temperature, cleanliness, etc. In general for the preferred compound, phenylphosphorodiamidate concentrations of 0.1 to 1000 ppm, expressed as the ratio of the weight of compound per weight of dry bedding, will be used. Preferably, 0.25 to 500 ppm, and most preferably, 0.5 to 200 ppm, of phenylphosphorodiamidate will be used. Similar concentrations of phosphorodiamide may be used.

The Figure illustrates how the application of phenylphosphorodiamidate to pine woodshaving in a horse barn according to the present invention reduces the formation of ammonia.

The preferred phenylphosphorodiamidate additive has the chemical formula

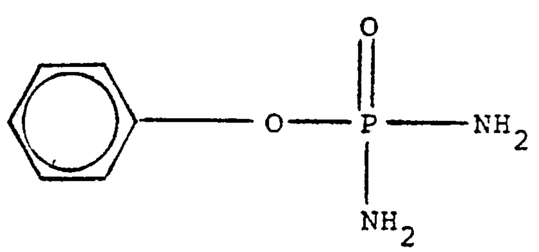

It is available commercially from several sources. The broader class of compounds are described in the patents to the Allied Corporation referenced earlier.

The conventional animal litter, bedding and adsorbent materials used in animal areas includes straw, wood shavings, wood chips, saw dust, clay, rice hulls, corn cobs, sand, vermiculite, etc. Mixtures of these materials can also be used.

Methods of application must ensure a uniform and continuous distribution of the phosphorodiamide and more preferably the preferred phenylphosphorodiamidate. If patches of bedding, litter, or absorbent material exist which are not treated with urease inhibitor, substantial amounts of ammonia may be formed. One suitable application method is merely to sprinkle or dust compound over the bedding, litter, or absorbent material as a pure solid. Compounding with one or more additional solids prior to sprinkling or dusting would be acceptable. These solids might absorb moisture from animal wastes, prevent the formation of some gaseous toxicant other than ammonia from said wastes, be colored to indicate the presence of the compound, or have some other purpose. Examples of such solids include zeolites, iron oxide, vermiculite, and other inorganic oxides and similar materials: the zeolites are natural or synthetic

In addition to being sprinkled or dusted onto bedding, litter, or other absorbent material as a pure solid or in admixture with other solids, the compound may be impregnated onto a solid carrier prior to application. Such a carrier may serve merely as a vehicle for the dispersal of the enzyme inhibitor, or it may have some additional function. Suitable carriers include natural and synthetic zeolites and clays, as well as other materials.

As an alternative to dispersal as a solid, the phosphorodiamide and more preferably the preferred phenylphosphorodiamidate may be dissolved in water or other solvent, and the resulting solution sprayed or poured onto the bedding, litter, or other absorbent material. Spraying of a solution is a preferred method of application, as it may yield a very uniform distribution of the compound. A hand-pumped sprayer or other device may be used for this purpose. Slurries may be used in place of solutions for solvents in which the compound is sparingly soluble.

The phosphorodiamide and more preferably the preferred phenylphosphorodiamidate may be applied to bedding, litter, or other absorbent materials before they are placed in animal areas. This application may take the form of simple physical mixing. Alternatively, the compound may be impregnated onto the bedding or other material. This impregnation may be done using a spray, immersion into a bath, or other suitable method, with an optional drying step. If the bedding or other material is artificial, the compound may be added to the raw materials during production.

The treated bedding, litter or other adsorbent material can be used for larger farm animals such as horses, cows, sheep and pigs; for domestic animals such as cats and dogs; and for smaller animals such as mice, rats, guinea pigs, hamsters, gerbils and other small mammals.

It is recognized that for birds the primary form of nitrogen waste is uric acid and not urea. However, as the uric acid decomposes, it forms urea which can be hydrolyzed enzymatically to form ammonia. Control of the levels of this ammonia can be achieved using the present treated bedding, litter or other adsorbent material. Accordingly, the bedding, litter or other adsorbent material can also be used for fowl and poultry such as chickens, turkeys, ducks, etc.

To test the effectiveness of PPDA the following procedure has been used. A synthetic urine is

made by combining 2.3 wt % urea and 1.1 wt % sodium chloride. To mimic the presence of bacteria, 200 units of jack bean urease is added to the synthetic urine. "Jack bean urease is a readily available form of urease which is suitable for use in this context because useases from most natural sources appear to act similarly. See Jack Bean Urease (EC 3.5.1.5).8. On the Inhibition of Urease by Amides and Esters of Phosphoric Acid" by R. K. Andrews et al, J. Am. Chem. Soc. 1986, 108, 7124-7125.

This urine is then poured over a sample of bedding or other absorbent material to which the PPDA had been applied. The treated sample is covered so that any gases produced may accumulate. The presence of ammonia is tested for by using Draeger tubes.

Having described the basic aspect of the invention, the following examples are given to illustrate the specific embodiments thereof.

## EXAMPLE 1

This example illustrates the application of phenylphosphorodiamidate as a solid in admixture with a solid diluent.

To a plastic dishpan (13.5" length x 13.5" width x 5.25" height) were added 200 g rice hulls, giving an approximately one square foot bed of 2" depth. Phenylphosphorodiamidate (0.02 g; source: Parish Chemical) then was sprinkled uniformly over the bed as a 1:100 (w/w) mixture with Natka clay. Simulated urine (800 g of a 2.3 wt % urea/1.1 wt % sodium chloride solution) containing jack bean urease (200 units) was poured over the treated bed. The inhibitor was present at a level of 100 ppm based on rice hulls alone, and at a 20 ppm level based on the weight of all components. The tray was covered with aluminum foil and allowed to stand at room temperature. No ammonia (less than 5 ppm) was noted in the dead space above the rice hulls after one week. By comparison, the dead space over an otherwise identical sample treated with clay, but with no phenylphosphorodiamidate contained greater than 700 ppm of ammonia after one day.

## EXAMPLE 2

This example illustrates the application of phenylphosphorodiamidate as a sprayed solution.

Phenylphosphorodiamidate (0.20 g) was dissolved in water (199.8 g) to produce a 1000 ppm solution. A portion (50 g) of this solution was sprayed evenly over a 200 g bed of rice hulls using a hand-pumped sprayer, after which simulated urine containing urease as described in Example 1 was poured over the bed. The phenylphosphorodiamidate concentration was 250 ppm with respect to the rice hulls, and 50 ppm overall. After seven days at room temperature, no ammonia was noted in the dead space above the bed. In a comparison experiment using a water spray containing no phenylphosphorodiamidate, greater than 700 ppm of ammonia was noted in the dead space after one day.

## EXAMPLE 3

This example illustrates the application of phenylphosphorodiamidate by pre-impregnation of the bedding.

A solution of phenylphosphorodiamidate (0.020 g in 200 g of water) was sprayed onto 200 g of rice hull, which were stirred by hand during the spraying to ensure uniformity. The rice hulls then were allowed to air dry overnight. Simulated urine containing urease was poured over a bed of the rice hulls in a plastic dishpan. The phenylphosphorodiamidate concentration was 100 ppm with respect to the rice hulls and 20 ppm overall. After one week at room temperature, no ammonia was detected in the dead space over this bed.

## EXAMPLE 4

This example illustrates the application of phenylphosphorodiamidate as a sprinkled solution in a barn.

A solution of phenylphosphorodiamidate (2.72 g in 2000 g of water) was sprinkled daily over the pine woodshavings (800 lb) in each of seven stalls in the barn using a watering can. A like amount of sugar in water was sprinkled over a second set of seven stalls in the same barn. The treated and the sugar control stalls were separated by a partition so that no exchange of gases between the two sides of the barn would occur. One mare was placed in each stall, and was fed, watered, and exercised appropriately. As indicated in the Figure, the phenylphosphorodiamidate treatment resulted in excellent control of ammonia formation, so that the gaseous ammonia level on the treated side of the barn remained below 10 ppm for 13 days. On the other hand, the ammonia level on the control side of the barn remained below 10 ppm for only 8 days.

## Claims

1. An absorbent material suitable for use as animal litter or bedding which material comprises a urease inhibiting compound, said urease inhibiting compound having the formula

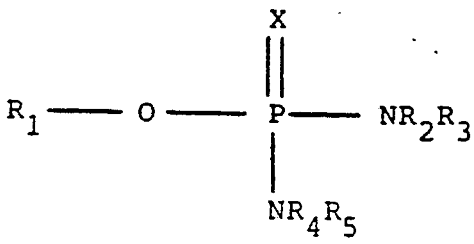

wherein
X is oxygen or sulfur;
$R_1$ is alkyl, aralkyl, cycloalkyl, heterocycle, cycloalkenyl, alkenyl or alkynyl either unsubstituted or substituted with one or more halo, hydroxy, thiocyano, heterocycle, alkylamino, dialkyamino, alkoxy, nitro, isocyano, quaternary ammonium, arylamino, alkanoyl, trihalomethyl, aryloxy, cyano, amino, isocyanato, acyloxy, $-ONO_2$, $-SO_2OH$, mercapto, arylmercapto, alkylmercapto, carboxyalkyl, $-OPO(OH)_2$, $-0B(OH)_2$, -OPO (OR) OH, $-OPO(OR)_2$, $-OSO_2OR$, $-SO_2R$, and $-OSO_2R$, wherein A is aliphatic or aryl, or a combination thereof, or

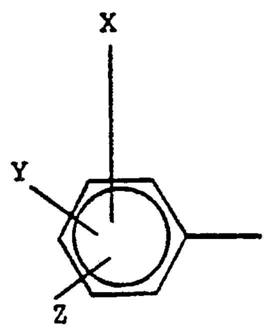

wherein
X, Y or Z are the same or different and are hydrogen, alkyl, arylamino, diarylamino, halogen, hydroxy, mercapto, alkylmercapto, amino, cyano, nitro, alkylamino, dialkylamino, arylmercapto, isocyano, isocyanato, trihalogenmethyl, alkoxy, thiocyano, alkanoyl, diaminophosphinyl, O-diaminophosphinyl, S-diaminophosphinyl, N-diaminophosphinyl, or any two X, Y and Z groups together may form an alkylene or alkenylene chain which may optionally include one or more divalent oxygen, nitrogen, or sulfur moieties forming a 3,4,5 or 6 membered fused ring structure, and
$R_2$, $R_3$, $R_4$ and $R_5$ are individually hydrogen, or alkyl having from 1 to about 4 carbon atoms.

2. A material according to claim 1 which comprises 0.1 to 1000 ppm of urease inhibiting compound, expressed as the ratio of the weight of the urease inhibiting compound to the weight of the absorbent material.

3. A material according to claim 1 or 2, wherein the urease inhibiting compound is phenylphosphorodiamidate.

4. A material according to claim 1,2 or 3, which comprises 0.25 to 500 ppm of urease inhibiting compound.

5. A material according to any one of claims 1 to 4 which comprises 0.5 to 200 ppm of urease inhibiting compound.

6. A material according to any one of the preceding claims wherein the absorbent material is selected from the group consisting of straw, wood shavings, wood chips, saw dust, clay, rice hulls, vermiculite and mixtures thereof.

7. A method for the prevention of the accumulation of ammonia in an area wherein animals are housed or maintained which method comprises providing in the area an absorbent material as claimed in any one of claims 1 to 6.

8. A urease inhibiting compound as defined in claim 1 or a composition comprising the compound for use in a method according to claim 7.

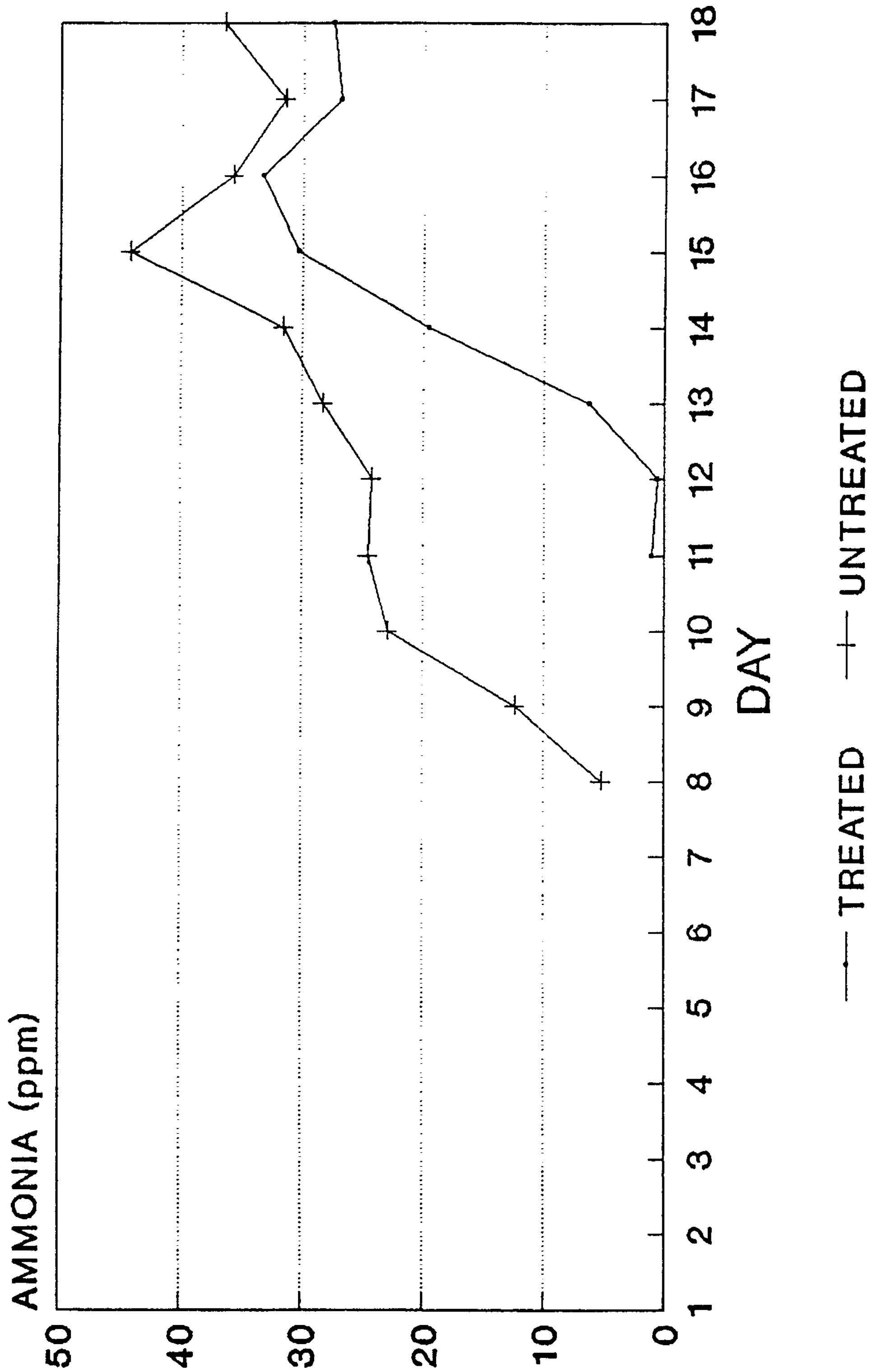
AMMONIA (ppm)
50
40
30
20
10
0
1
2
3
4
5
6
7
8
9
10
11
12
13
14
15
16
17
18
DAY
TREATED
UNTREATED

European Patent Office

# EUROPEAN SEARCH REPORT

Application Number

**EP 90 30 6548**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 517 004 (M.D. SWERDLOFF et al.)<br>* column 2, line 17 - column 3, line 11; column 4, lines 15-56; column 6, lines 17-39; column 8, lines 4-23,54-63; column 9, line 5 - column 28, line 7 *<br>– – – | 1-8 | A 01 K 1/015<br>C 07 F 9/24 |
| A | DD-A-1 590 04 (M. HARTMANN et al.)<br>* the whole document *<br>– – – | 1-8 | |
| A | CHEMICAL ABSTRACTS<br>vol. 107, no. 17, 26 October 1987, page 626, abstract no. 153442y, Columbus, Ohio, US; F. PEDRAZZINI et al.: "The effect of phenyl phosphorodiamidate on urease activity and ammonia volatilization in floodes rice" & Biol. Fertil. Soils 1987, vol. 3, no. 3, pages 183-188 * abstract *<br>– – – | 1 | |
| D,A | DD-A-2 410 12 (INSTITUT FUER DUENGUNGSFORSCHUNG LEIPZIG-POTSDAM)<br>* the whole document *<br>– – – – – | 1 | |
| | | | TECHNICAL FIELDS SEARCHED (Int. Cl.5) |
| | | | A 01 K |

The present search report has been drawn up for all claims

| Place of search | Date of completion of search | Examiner |
|---|---|---|
| Berlin | 18 September 90 | MARTIN DEL RIO A |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document